Europäisches Patentamt

European Patent Office

Office européen des brevets

(11) Veröffentlichungsnummer: **0 156 180**
**A1**

(12) **EUROPÄISCHE PATENTANMELDUNG**

(21) Anmeldenummer: **85102227.7**

(22) Anmeldetag: **28.02.85**

(51) Int. Cl.⁴: **B 60 C 15/02**

(30) Priorität **03.03.84 DE 3407968**

(43) Veröffentlichungstag der Anmeldung:
**02.10.85 Patentblatt 85/40**

(84) Benannte Vertragsstaaten:
**AT BE CH FR GB IT LI LU NL SE**

(71) Anmelder: **Janus, Jonny**
**Kreuzstrasse 53**
**D-4000 Düsseldorf 1(DE)**

(72) Erfinder: **Janus, Jonny**
**Kreuzstrasse 53**
**D-4000 Düsseldorf 1(DE)**

(74) Vertreter: **Gille, Christian, Dipl.-Ing. et al,**
**Redies, Redies, Türk & Gille, Patentanwälte**
**Brucknerstrasse 20**
**D-4000 Düsseldorf 13(DE)**

(54) **Radialreifen.**

(57) Es ist ein Radialreifen mit zwei Füßen offenbart, der in an der Innenseite einer Felge umlaufenden Nuten zu verankern ist. Im Bereich jedes Fußes des Radialreifens befindet sich ein den Reifen bzw. dessen Fuß in einer der Nuten verankernder Ring, der innerhalb des Reifens und der Felge eingesetzt ist und den Wulstring üblicher Reifen ersetzt. Der Ring kann als Druckring ausgebildet sein und das Reifenmaterial mit einer gewissen Vorspannung in die betreffende Nut der Felge drücken.

FIG.1

EP 0 156 180 A1

G54 941                                                    0156180

Jonny Janus, Kreuzstr. 53, 4000 Düsseldorf 1

R A D I A L R E I F E N

Die Erfindung betrifft einen Radialreifen, dessen beide Füße in an der
Innenseite einer Felge umlaufenden Nuten zu verankern sind.

Radialreifen dieser Gattung sind in der älteren Patentanmeldung P 3400649.4
offenbart. Bei derartigen Radialreifen besteht das Problem, sie sicher
an der Felge zu verankern, so daß sie bei den im Betrieb auftretenden
Beanspruchungen und Belastungen nicht aus den Verankerungsnuten herausgezogen werden können. Dies verhindert man bisher durch eine Art Wulstring,
der in dem Reifenfuß eingebettet ist und sich in die betreffende Nut
an der Innenseite der Felge drückt. Es ist jedoch problematisch, derartige
Radialreifen an der verhältnismäßig hohen Felge zu montieren, weil der
eine Reifenfuß bei der Montage über die verhältnismäßig hohe Felge hinweg
gezogen werden muß.

Der Erfindung liegt die Aufgabe zugrunde, den Radialreifen der eingangs
genannten Gattung derart zu verbessern, daß er leichter und kostengünstiger
und seine Montage vereinfacht und die Befestigung an der Felge verbessert
wird.

Diese Aufgabe wird erfindungsgemäß dadurch gelöst, daß im Bereich jedes
Fußes des Radialreifens ein ihn in eine der Nuten der Felge drückender
Ring innerhalb von Reifenfuß und Felge eingesetzt ist. Mit anderen Worten
wird erfindungsgemäß vorgeschlagen, anstelle der in die beiden Füße
der Karkasse eingebetteten Wulstringeinlagen zwei Druckringe vorzusehen,
die von außen auf den Reifen in dessen Fußbereich einwirken und
dementsprechend die Karkasse in die an der Innenseite bzw. dem Innenumfang
der Felge befindlichen Nuten drücken. Dadurch wird die Verankerung des
Reifens an der Felge verbessert und die Montage erleichtert, weil sich
der eine Reifenfuß leichter dehnen und dementsprechend einfacher über
die Felge hinwegziehen läßt, wenn er keinen geschlossenen Wulstring
enthält. Die Cordfäden der Karkasse werden mit dem Reifen in die Nuten

.../2

der Felge gedrückt und dabei aus ihrem gestreckten Verlauf ausgelenkt.
Der Reifen wird zunächst auf die Felge aufgesetzt, woraufhin man von
den beiden Seiten der Felge jeweils einen Druckring einlegt. Die Druckringe
können jeweils von einem Schutzband abgedeckt werden, das den Radialreifen
nicht nur im Fußbereich abdeckt, sondern den betreffenden Druckring auch
in der gewünschten Position sichert.

Die Druckringe können geschlossene Ringe aus Metall oder Kunststoff,
beispielsweise Draht, sein, jedoch können sie gemäß einer praktischen
Ausführungsform der Erfindung auch geteilt ausgebildet sein, wobei die
zusammenwirkenden Stirnflächen jedes Druckringes gebogen ausgebildet
sind. Dementsprechend können sich die Stirnflächen des Druckringes in
jeder Position gegeneinander abstützen, d.h. auch dann, wenn sie nur
teilweise miteinander fluchten. Bei der Montage kann daher der Durchmesser
jedes Druckringes verringert werden. Nach erfolgter Montage stellt sich
der geteilte Druckring in die ursprüngliche Lage bzw. in seine Kreisform
zurück, wobei die gebogene Ausbildung der miteinander zusammenwirkenden
Stirnenden diese Rückkehrbewegung begünstigt oder sogar erst ermöglicht.
Zweckmäßig liegt der Druckring unter radial nach außen gerichtetem Druck
am Reifenfuß an und verbessert dadurch dessen Halterung und Abdichtung.

Nach einem weiteren Merkmal der Erfindung ist der Reifen im Bereich
seiner Füße jeweils mit einer in die betreffende Nut der Felge
eingreifenden Ausbeulung versehen, wodurch die Lage des montierten Reifens
an der Felge genau vorherbestimmbar ist. Ebenso wird die richtige Position
des montierten Druckringes durch die Ausbeulung gewährleistet.

Nach einem anderen Merkmal der Erfindung weist der Reifen im Bereich
des äußeren Endes jedes Fußes eine Verdickung auf. Diese Verdickung
übergreift sozusagen hakenartig den montierten Druckring, so daß die
Verankerung des Reifens an der Felge hierdurch zusätzlich verbessert
ist.

Die Cordeinlage braucht im Bereich der Füße des Reifens nicht umgelegt
zu werden, obwohl dies im Bereich der Verdickung am äußeren Ende jedes
Fußes möglich ist. Dadurch läßt sich der Einbau der Cordeinlage in den
Reifen vereinfachen und weitgehend mechanisieren.

/3.

**0156180**

Nach noch einem weiteren Merkmal der Erfindung kann jeder Fuß des Reifens
im Bereich der Ausbeulung ein ringförmiges und vorzugsweise dehnbares
Verankerungselement enthalten, das die Verankerung der Cordfäden der
Karkasse im Reifenmaterial und in den Nuten der Felge verbessert.

Durch die Erfindung ist es möglich, den auf der Innenseite der Felge
bei der Montage anzubringenden Reifenfuß einfacher und zweckmäßiger
auszubilden. Statt einen genau positioniert in das Reifenmaterial
eingebetteten Wulstring mit kalandrierten Gewebestreifen umschlingen
zu müssen, kann die Cordeinlage auch im Bereichdes Reifenfußes gerade
verlaufen und vorzugsweise zur Felgenmitte auslaufen. Der Reifenfuß
ist dabei nicht undehnbar bzw. inkompressibel, sondern vielmehr flexibel
ausgebildet, was seine Montage und Fertigung ganz wesentlich vereinfacht.

Als Variante können die Cordfäden der Karkasse aber im Bereich des Reifen
fußes zur besseren Verankerung im Gummi auch mit rechtwinklig zu ihnen
angeordneten Elementen verbunden werden. Hierdurch bzw. durch ein Umschlagen
der Cordfäden, ggfs. um ein Verankerungselement, erhält man eine Verdickung
in oder neben der für den Reifenfuß vorgesehenen Nut der Felge, die
als eine Art Widerlager oder Anlage für einen Druckring dient. Der
Druckring preßt den Teil des Reifenfußes, der als Reifensitz oder
Ausbeulung profiliert ist, in die entsprechende Nut der Felge, wodurch
sowohl eine formschlüssige als auch eine kraftschlüssige Verbindung
entsteht.

Bei der erfindungsgemäßen Ausgestaltung des Radialreifens übernimmt
die ohnehin vorhandene Felge alle Zugkräfte, die aus den Reifenflanken
auf die Verankerung der Reifenfüße an der Felge einwirken, während der
Druckring alle entsprechenden Druckkräfte auffängt.

Der auf die Außenseite des Reifenfußes einwirkende Druckring dient gleichzeitig auch als Gegenlager für die an ihm anliegende Verdickung des
Reifenfußes.

Der Druckring kann mit einem ringförmigen Schutzband abgedeckt sein
und mit diesem auch aus einem Stück hergestellt werden. In beiden Fällen
ist das Schutzband auf den Druckring abgestimmt.

0156180

Der als Montageelement dienende Druckring kann auch begrenzt kompressibel
sein, so daß er nach Überwinden einer flexiblen Kante vor der Ausbeulung
des Reifenfußes praktisch entspannt, d.h. nicht zusammengedrückt in
der Ausbeulung oder Sitzrille des Reifenfußes liegen kann. Durch die
Aufgabensteilung zwischen Felge und Druckring kann dieser einfacher
und leichter ausgeführt werden.

Wegen der geometrischen Form der als Sitzrille dienenden Nut in der
Innenseite der Felge sowie der entsprechenden Profilierung des Reifenfußes
ergibt sich in Verbindung mit dem Druckring eine absolut sichere und
dichte Verbindung von Reifen und Felge. Dies wird noch dadurch begünstigt,
daß im Bereich der Verankerung des Reifenfußes an der Felge praktisch
keine Biegebewegungen stattfinden.

Da bei dem erfindungsgemäßen Radialreifen ein in denselben eingebetteter
Wulstringkern entfallen kann, ist der Reifenfuß sehr viel einfacher
herzustellen und benötigt auch eine geringere Querschnittsfläche. Somit
ist der erfindungsgemäße Radialreifen im Fußbereich besonders flexibel,
was seine Montage sehr erleichtert.

In der Zeichnung sind Ausführungsbeispiele des erfindungsgemäßen Radialreifens schematisch dargestellt, und zwar zeigt

Fig. 1    einen Teilschnitt durch den Radialreifen und eine Felge, an
          der er montiert ist,

Fig. 2    einen Teilschnitt einer abgewandelten Ausführungsform des an
          der Felge montierten Radialreifens,

Fig. 3    einen Teilschnitt wie in Fig. 2 einer weiteren abgewandelten
          Ausführungsform und

Fig. 4    ein Ansicht des Druckringes nach einer Ausführungsform der
          Erfindung

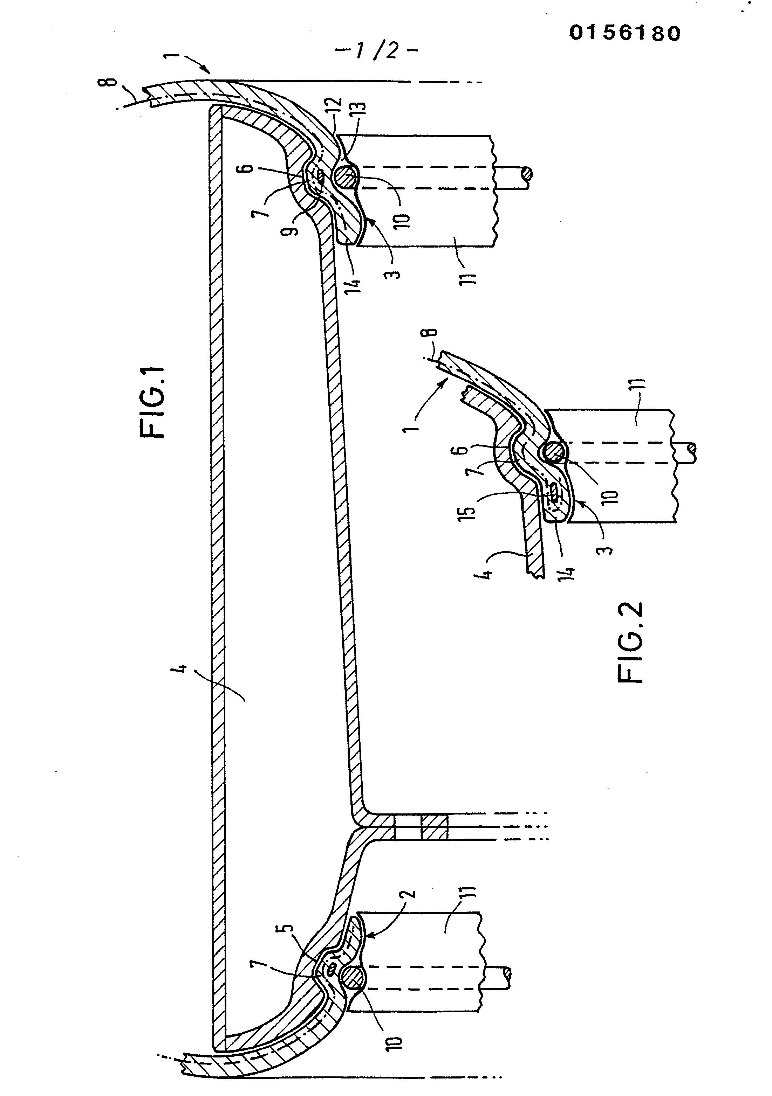

Der in Fig. 1 teilweise dargestellte Radialreifen 1 ist mit seinen beiden

.../5

Füßen 2 und 3 an einer ringförmigen Felge 4 montiert, die zu diesem
Zweck an der Innenseite zwei umlaufende Nuten 5 und 6 enthält.

Jeder Reifenfuß 2 und 3 ist jeweils mit einer Ausbeulung 7 versehen,
die in eine der Nuten 5 bzw. 6 eingreift. Die Ausbeulung 7 greift sozusagen hakenartig in die betreffende Nut 5 bzw. 6 ein. Es ist erkennbar,
daß eine sich im Radialreifen 1 befindliche Cordeinlage 8 gradlinig
verläuft, sich jedoch der Form der Ausbeulung anpaßt. Innerhalb der
Ausbeulung ist ein verhältnismäßig schwaches Verankerungselement 9 in
das Reifenmaterial eingebettet.

Im Bereich der Ausbeulung 7 wirkt von der Innenseite auf den Reifenfuß
2 bzw. 3 ein Druckring 10, der von einem Band 11 überdeckt ist, mit
dem er aus einem Stück bestehen kann oder auf das er jedenfalls abgestimmt
ist. Der Druckring 10 wird bei der Montage über eine flexible Kante 12
des Radialreifens 1 hinweggeschoben und legt sich hinter diese flexible
Kante 12 in eine Vertiefung 13, die der Ausbeulung 7 des Reifenfußes
2 bzw. 3 entspricht. Hinter dieser Vertiefung ist der Reifenfuß 3 mit
einer Verdickung 14 aus flexiblem Reifenmaterial versehen, so daß der
Druckring 10 sicher in der gewünschten Position gehalten wird und dementsprechend der betreffende Reifenfuß nicht aus seiner Verankerung an
der Felge herausgezogen werden kann.

Die Ausführungsform gemäß Fig. 2 unterscheidet sich von der Ausführungsform gemäß Fig. 1 dadurch, daß sich innerhalb der Verdickung 14 des
dort gezeigten Reifenfußes 3 ein Verankerungselement 15 befindet, um
den das Ende der Cordeinlage 8 zurückgeschlagen ist, während sich im
Bereich der Ausbeulung 7 kein Verankerungselement befindet. Dadurch
wird die Montage des Radialreifens 1 weiter vereinfacht.

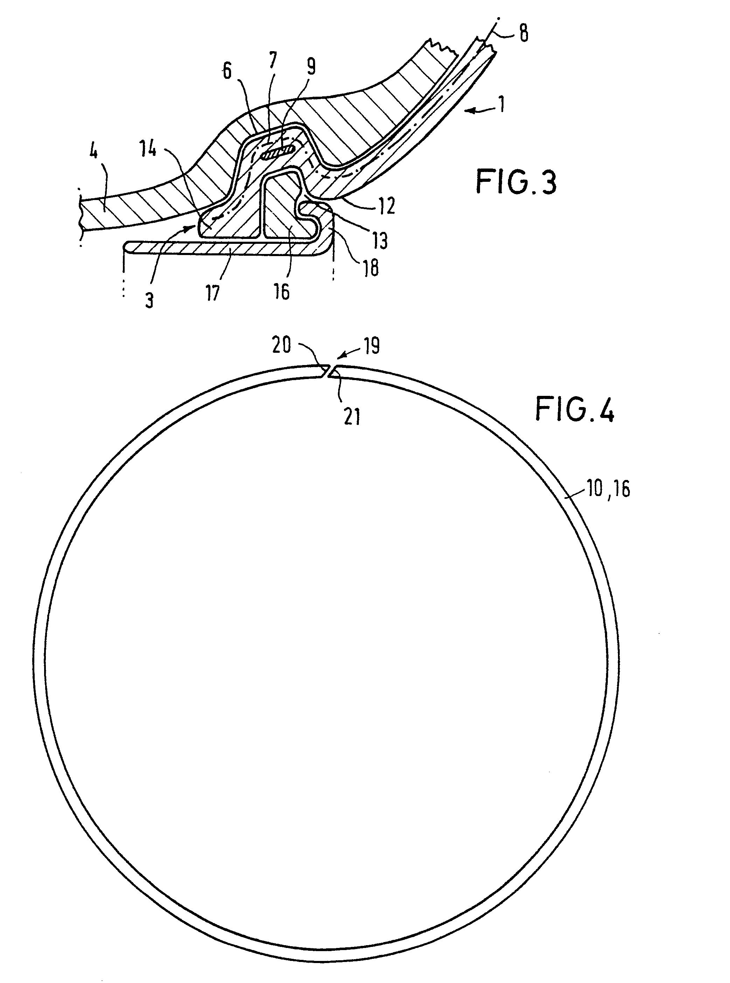

Bei der Ausführungsform aus Fig. 3 hat der Druckring 16 eine profilierte
Querschnittsform und ist der Vertiefung 13 im Bereich der Ausbeulung 7
des Reifenfußes 3 noch besser angepaßt, so daß die Ausbeulung 7 entsprechend fester in der Nut 6 der Felge 4 gehalten wird. Ein Abdeckring
17 ist mit einer umgebördelten Kante 18 in das Profil des Druckringes 16
eingehängt und dabei zwischen Druckring 16 und der flexiblen Kante 12

...√6

des Radialreifens 1 eingeklemmt. Daher sichert der Abdeckring 17 den Druckring 16 gegen Herausspringen aus seiner Betriebsposition aufgrund von Stößen oder sonstigen Betriebsbeanspruchungen.

Aus Fig. 4 geht hervor, daß der im Querschnitt kreisförmige Druckring 10 geteilt ist, wobei die im Bereich der Teilung 19 befindlichen, einander gegenüberliegenden Stirnenden 20 und 21 nach einem Kreisbogen mit verhältnismäßig kleinem Radius verlaufen, der etwa der Biegebewegung des Druckringes 10 beim Zusammendrücken desselben entspricht. Dadurch wird erreicht, daß die Stirnflächen 20 und 21 im Bereich der Teilung 19 während der Montage des Druckringes 10 sich gegeneinander verschieben lassen, bei normaler Belastung jedoch fest aufeinander liegen.

Durch die Geometrie der in der Felge 4 vorgesehenen Nuten 5 und 6 und des als Beispiel in Fig. 3 dargestellte Profil des Druckringes 16 kann die Spannkraft des Druckringes und damit die Abdichtung im Bereich des Reifensitzes verbessert werden. Dabei kann der Druckring 16 einstückig ausgebildet sein, jedoch läßt er sich ebenso wie der Druckring 10 in der in Fig. 4 dargestellten und erläuterten Weise teilen.

G54941

Jonny Janus, Kreuzstr. 53, 4000 Düsseldorf 1

Patentansprüche

1. Radialreifen, mit zwei in an der Innenseite einer Felge umlaufenden Nuten zu verankernden Füßen und je einem im Bereich jedes Fußes den Reifen in einer der Nuten haltenden, innerhalb des Reifens und der Felge eingesetzten geteilten Ring,
d a d u r c h   g e k e n n z e i c h n e t ,
daß jeder Ring (10;16) als Druckring ausgebildet ist und seine im Bereich der Teilung befindlichen, einander gegenüberliegenden Stirnflächen (20,21) nach einem Kreisbogen verlaufen, der etwa der Biegebewegung des Druckringes beim radialen Zusammendrücken desselben ent spricht.

2. Radialreifen nach Anspruch 1, dadurch gekennzeichnet, daß die Druckringe (10;16) am Reifen (1) im Bereich seiner Füße (2,3) jeweils in einer in die betreffende Nut (5,6) der Felge (4) eingreifenden Ausbeulung (7) anliegen.

3. Radialreifen nach Anspruch 1 oder 2, dadurch gekennzeichnet, daß der Reifen (1) im Bereich des äußeren Endes jedes Fußes (2,3) eine neben dem Druckring (10;16) liegende Verdickung (14) aufweist.

4. Radialreifen nach Anspruch 3, dadurch gekennzeichnet, daß in der Verdickung (14) ein ringförmiges und vorzugsweise dehnbares Verankerungselement (15) zum Parallelhalten der Fäden der Cordeinlage (8) eingebettet ist.

5. Radialreifen nach einem der Ansprüche 1 bis 3, dadurch gekennzeichnet, daß jeder Fuß (2,3) im Bereich der Ausbeulung (7) ein ringförmiges und vorzugsweise dehnbares Verankerungselement (9) zum Parallel halten der Fäden der Cordeinlage (8) enthält.

...../2

6. Radialreifen nach einem der Ansprüche 1 bis 5, dadurch gekennzeichnet, daß der Druckring (16) einen profilierten Querschnitt hat.

7. Radialreifen nach Anspruch 6, dadurch gekennzeichnet, daß der Druckring (16) in einen zwischen ihm und dem Reifen (1) eingeklemmten Abdeckring (17) eingehängt ist.

G/b

FIG.1

FIG.2

-1/2-

0156180

0156180

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A- 333 125 (A.H. SMITH)<br>* Seite 1, Zeilen 6-22; Seite 2, Zeilen 11-96 * | 1-6 | B 60 C 15/02 |
| | --- | | |
| A | US-A-2 873 785 (F. HOWARD)<br>* Spalte 4, Zeilen 10-45 * | 7 | |
| | --- | | |
| A | DE-C- 161 410 (A.H. SMITH) | | |
| | --- | | |
| A | FR-A-2 482 904 (CONTINENTAL) | | |
| | ----- | | |

RECHERCHIERTE SACHGEBIETE (Int Cl 4)

B 60 C

Der vorliegende Recherchenbericht wurde für alle Patentansprüche erstellt.

| Recherchenort | Abschlußdatum der Recherche | Prüfer |
|---|---|---|
| DEN HAAG | 20-05-1985 | SCHMITT L.P. |